# EUROPEAN PATENT APPLICATION

(11) **EP 3 448 075 A1**
(43) Date of publication of application: **27.02.2019**
(21) Application number: 17187276.5
(22) Date of filing: 22.08.2017
(51) Int. Cl.: H04W 12/04

(54) **METHOD FOR SECURING A COMMUNICATION CONNECTION**

(71) Applicant: Gemalto M2M GmbH, 81541 Munich (DE)
(72) Inventor: BREUER, Volker, 16727 Boetzow (DE); KHALIQ, Osaid, 10707 Berlin (DE); ULRICH, Thomas, 67098 Bad Dürkheim (DE); WEHMEIER, Lars, 14612 Falkensee (DE)
(74) Representative: Grevin, Emmanuel

(57) **Abstract**

The present invention relates to a method for securing a direct communication connection between two user equipments, both configured to operate in a wireless network, the first user equipment maintaining a first authentication code received from a first security center accessible via the wireless network, said first security center being assigned to a first area the first user equipment is located in, said first security center maintaining a first authentication list for said first area, wherein a representation of the first authentication code is added to said first authentication list, further said representation of said first authentication code is exchanged with at least one second security center covering a second area in proximity of the first area, being added to a second authentication list for said second area, maintained by said second security center, and in case said first user equipment has moved to the second area, the step of setting up the direct communication connection with a second user equipment, said second user equipment having retrieved the second authentication list from the second security center, comprises:
- securing that communication connection request by using said first authentication code,
- evaluating at second user equipment said received request with the second authentication list,
- approving communication, in case received request is secured according to the representation of said first authentication code stored in second authentication list.

## Description

### FIELD OF THE INVENTION

The present invention relates to a method for securing a communication connection. The invention also pertains to a user equipment using said method.

The invention further relates to a security center for securing direct communication between user equipments. The invention also relates to a system for securing a direct communication connection between two user equipments.

### BACKGROUND OF THE INVENTION

In the field of wireless communication a big new communication use case is dawning, which is the vehicle to everything (V2X) communication. It relates in a broader sense to communication of vehicles with other communication partners, in particular other vehicles (V2V). This use case is basically the backbone for a real autonomous driving architecture, comprising exchange between vehicles regarding unexpected situations as well as with roadside beacons, e.g. for exchanging information like dynamic speed limits, deviations etc. Technically the concept comprises a direct communication between the vehicle and the "X", instead of a communication via wireless network base stations. In the current ETSI specifications of the cellular communication standard this technology is called "Sidelink", "D2D", or "ProSe". Here the term "ProSe" is used to describes the end-to-end application, which is here the device-to-device-communication, whereas "Sidelink" is used to describe the channel structure, i.e. logical channels, transport channels, and physical channels which are used in the air-interface to realize the ProSe application. One major issue with this communication is to implement a strong security in order to avoid any hacking, false information, alarms etc. The whole concept is only reliable and accepted when such security measures are assured. As a matter of fact, securing wireless communication is a well-known task, with sufficient long keys and reliable encryption standards communication is secured already today. However for V2X communication the requirements are somehow different.

First there is a time issue. When a vehicle is passing a beacon or another car there is usually not sufficient time for exchanging keys or certificates, exchanging encrypted messages, that is decrypting and interpreting them and responding to the messages. The security overhead impedes such communication.

Second there is also a privacy issue. When a vehicle is traveling through the country and is communicating with other communication endpoints by using a predefined certificate - e.g. provided with a SIM card provided by the wireless operator - then the movement of the vehicle and its owner is traceable. For acceptance of the system among the common customer this is another crucial issue.

Therefore it requires a method for securing V2X communication which is sufficiently fast and still assures privacy of the vehicle owner.

It is therefore the goal of present invention to propose a solution for an improved securing of the direct communication channels between two user equipments. Further alternative and advantageous solutions would, accordingly, be desirable in the art.

### SUMMARY OF THE INVENTION

For this it is according to a first aspect of the invention suggested a method to operate a wireless communication unit according to claim 1. It is further suggested according to a second aspect of the invention a user equipment according to claim 9. According to a third aspect of the invention it is proposed a security center according to claim 11. It is further suggested according to a fourth aspect of the invention a system according to claim 15.

In a first aspect of the invention it is proposed a method for securing a direct communication connection between two user equipments, both configured to operate in a wireless network, the first user equipment maintaining a first authentication code received from a first security center accessible via the wireless network, said first security center being assigned to a first area the first user equipment is located in, said first security center maintaining a first authentication list for said first area, wherein a representation of the first authentication code is added to said first authentication list, further said representation of said first authentication code is exchanged with at least one second security center covering a second area in proximity of the first area, being added to a second authentication list for said second area, maintained by said second security center, and in case said first user equipment has moved to the second area, the step of setting up the direct communication connection with a second user equipment, said second user equipment having retrieved the second authentication list from the second security center, comprises:
- securing that communication connection request by using said first authentication code,
- evaluating at second user equipment said received request with the second authentication list,
- approving communication, in case received request is secured according to the representation of said first authentication code stored in the second authentication list.

The inventive method relates to direct communication connections between two user equipments. Such user equipments are configured to operate with a wireless, in particular cellular wireless network, such as 2G, 3G, 4G etc., or a combination thereof. The user equipments comprise transceiver circuitry for contacting base stations of the wireless network over the air interface. Further such user equipments comprise a secured storage area for network access credentials, in particular in an removable or embedded subscriber identity module, resp. a UICC.

While for securing the communication between the user equipments and the wireless network's base station sufficiently means are available, this is not the case for direct communication connections between user equipments.

Such direct communication connections in particular relate to new technologies encompassed under the term device-to-device communication. In cellular technology standards for such device-to-device communication this is covered by the so-called ProSe technology, which makes use of a Sidelink channel structure.

It is commonly acknowledged that the ProSe communication makes use of the same authentication and authorization methods as regular wireless communication. However, this is not sufficient for movable user equipments like in cars, which want to communicate when passing by, e.g. for warning of danger situations etc., which is seen as one of the backbones of autonomous driving. It requires at least faster methods for securing the device-to-device communication, which moreover fulfills data privacy concerns, as drivers do not want to be tracked.

For that the inventive method suggests that a user equipment which is planning to setup a direct communication connection to another user equipment maintains a first authentication code. This authentication code is received from a first security center.

The first security center is accessible via the wireless network, where the user equipment is currently operating with via its serving base station. The security center is assigned to a first area, which preferably covers the cell area of at least one base station of the wireless network. The user equipment is located in said first area, in particular due to the fact that it is camping on a base station, which cell area is part of the first area. Preferably the base station knows how to access the responsible security center.

According to a preferred embodiment the first area comprises more than one cell of the wireless network and the base stations of said more than one cells are connected to said first security center.

With this embodiment a plurality of cells area collected in one area with a security center. That simplifies setting up the areas and assures that areas have sufficient size, even though when cells are further split. Should it turn out that too many user equipments are located in one security center, then a split of areas, that means incorporating of additional security centers is envisaged. Via the wireless network connection, that means by virtue of the serving base station the user equipment is configured to receive said first authentication code from the security center.

Preferably the authentication code is a key used for signatures or message authentication coding (MAC). The authentication code is in a first approach common for the user equipment and the security center. This concept is called symmetric keys.

Alternatively, based on the envisaged security level, the authentication code represents a pair of private and public key, wherein with the private key a message is encrypted, or at least a hash value of the message is encrypted. With the public key the receiving user equipment can decrypt the message or the hash of the message and check the authenticity of the message and that the message is unchanged. This relates to the asymmetric key concept.

In order to avoid sending private keys over the wireless network, the user equipment could also have stored - in particular in the subscriber identity module provided by the operator - one or more private keys, and gets as authentication code a random number or any other code. With the private key and random number the user equipment may encrypt the message or a hash of the message etc. Approaches like salting the original message are encompassed by this inventive method.

The public key and the random number is provided to the security center and provided to the other user equipments.

Preferably the authentication code is published by a certification authority (CA), which on request provides valid authentication codes. Hence, the wireless network resp. the security center checks, if the user equipment is an eligible communication partner for device-to-device communication, and confirms this by providing the authentication code, which is received from the certification authority.

In a preferred embodiment it is suggested that the user equipment is connected to a subscriber identity equipment, wherein receiving of the first authentication code from the first security center comprises sending a request to the wireless network hosting the first security center including credentials relating to data stored on said subscriber identity equipment.

The subscriber identity are preferably stored in the SIM resp. UICC which is available at each user equipment. With this the eligibility of the user equipment is preferably assured with already available means.

The security center is maintaining an authentication list. This is in particular a list of representations of those authentication codes that were provided to user equipments located in the assigned area, and were not revoked or otherwise deactivated.

Depending upon the type of authentication code, the authentication code itself, which is provided to the user equipment is stored in the authentication list, or a representation of it. This relates in particular to a public key, when the authentication code represents the private key. Further when the authentication code is a key for a signature or a message authentication coding, then other derivative codes are stored in the authentication list. Consequently in the course of providing the authentication code to the user equipment a representation of said authentication code is further added to the authentication list of the security center.

The authentication list in particular comprises a list of codes relating to the provided authentication code, and additionally an identification of the user equipment which received the authentication code. A code relating to the provided authentication code is in particular a public key being part of a private/public key pair created by the certification authority, wherein the private key is provided to the user equipment.

Further the security center exchanges the authentication list or changes occurring to the list with the user equipments currently operating in the area where the security center is assigned to. Moreover the security center exchanges the authentication list resp. the changes occurring to the list with at least one second security center.

Such at least one second security center is assigned to a second area, which is in proximity to the first area. Being in proximity means in particular the second area is sharing a border with the first area. Advantageously the security center shares the authentication list with all security centers where it shares a border with. This is to assure that a moving user equipment which got assigned an authentication code will in any case when leaving the area of current security center arrive in an area assigned to a security center which maintains an updated authentication list of the current security center.

A user equipment which received said valid authentication code may setup a direct communication connection with another user equipment, whereby for the setup of a direct communication connection a request message is sent to the second user equipment. For securing this message the authentication code is used. Such using is in particular carried out by encrypting the message or parts of the message with the authentication code, resp. a key being part of the authentication code. Alternatively the authentication code or parts thereof are submitted with the request message to the other user equipment.

In any case the receiving user equipment needs to have sufficient information in order to check with its authentication list, which it received from the security center.

When this is successful the receiving second user equipment sends an approval message to the requesting user equipment.

Preferably the second user equipment likewise provides its own authentication code to the requesting user equipment, which then carries out the same steps, before the direct communication connection is setup.

The invention is advantageous as it does not only work in the area of the security center where the user equipment received its authentication code from, but also when the user equipment moved to another area assigned to a second security center.

As the second security center received the authentication list from the first security center, the representation of the authentication code of the user equipment is known in the second security center. When the second authentication list maintained by the second security center gets an update, then it is shared with the user equipments being located in the second area, where the second security center is assigned to.

Hence, when the first user equipment is moving in the second area and immediately tries to setup a direct communication connection with a second user equipment already situated in that second area, then no further preparatory steps need to be carried out anymore. This saves enormous time for securing the direct communication connection, as no exchange with network entities is necessary before setting up the connection.

In a preferred embodiment it is proposed that the second security center provides to the first user equipment a second authentication code, and adding a representation of said second authentication code to said second authentication list, and removing the representation of the first valid authentication code assigned to the first user equipment from the second authentication list.

With this embodiment the second security center is informed about the user equipment having arrived at the second area. This is preferably happening by means of regular updates of the user equipment to the serving base station. This is in particular a location area update (LAU) or tracking area update (TAU), which the user equipment is supposed to send to its serving base station.

Furthermore when the first user equipment sent a direct communication connection request to a second user equipment, and in particular when the second user equipment figures out that the requesting first user equipment uses an authentication code provided by another security center, then the second user equipment preferably informs the security center about the arrived first user equipment.

This embodiment is advantageous as it assures the privacy of the moving user equipment when traveling across areas by changing authentication codes through the security centers. Further it is assured that the security center of the arrived area exchanges the new authentication codes with its neighbouring security centers and so assures a seamless connectivity of the user equipment through the wireless network.

Should a user equipment pass an area without any interaction with another user equipment or no tracking area update, then at the next area setting up a direct communication might fail. As a safe harbor the user equipment is then configured to request a new authentication code from the then responsible security center for the serving base station, and commence setting up a communication.

When the user equipment was located in and out of service situation, e.g. a tunnel or uncovered area, it is proposed to automatically make a tracking area update once service is back. The update message causes a renewal of the authentication code, or reconfirmation that the authentication code is still valid. According to another preferred embodiment it is proposes that at least one security center maintains an authentication list, shared with the neighboring security center, wherein the step of providing of an authentication code to a requesting user equipment comprises selection of one representation of an authentication code stored in the authentication list.

With this embodiment the security center maintains upfront a authentication list comprising authentication codes which are not currently assigned to user equipments. When a user equipment requests an authentication code, then it is assigned to the user equipment. This embodiment is advantageous as it allows asynchronous exchange with the other security centers resp. user equipments in the area.

The valid authentication codes are preferably received from a certificate authority (CA).

Preferably the security center maintains for each entry of the authentication list if it is currently in use. Hence, as long as unused authentication codes are available, for each user equipment asking for a new authentication code one of the unused authentication codes is provided to the user equipment, and consequently marked as used.

Should all authentication codes are in use, then it would not harm, if an already used authentication code is provided to another requesting user equipment. With such 'overbooking' no security issue appears. Preferably the authentication code is selected if it is least used, or the last assignment to a user equipment is longer ago than for the other authentication codes etc. Should it turn out that most of the time the authentication codes are in that sense overbooked, then this might lead to a redesign of security centers and areas. Alternatively the authentication list gets additional authentication codes from the certificate authority or any other reliable source.

Preferably the authentication list is regularly updated, e.g. once a week, which means that all authentication codes are revoked and new authentication codes are distributed. Preferably for a short time the old and the new authentication codes are usable by user equipments, but after one request or tracking area update the new authentication code needs to be used.

This embodiment further reduces the amount of data exchange in tight timely connection with the direct communication connection request of the user equipment. Further it reduces the exchange between security centers and between security centers and user equipments.

According to another advantageous embodiment it is suggested that at least two user equipments belong to a group maintained by the wireless network, wherein the at least two user equipments receive in response to the request to the first security center the same first authentication code.

This embodiment introduces the possibility of creating trust groups. Thus two or more user equipments share the authentication code, when they belong to one trust group. It is in particular maintained by the security center resp. the CA, to figure out if as part of the check of credentials that members of a trust group are requesting an authentication code. Consequently after a first member of the trust group requested an authentication code, every other member requesting an authentication code is receiving the same authentication code. Alternatively the authentication codes have common parts which are identifiable as belonging to the same group.

For the security center this reduces the efforts for handling the authentication list as for a trust group only one representation of the authentication code assigned to the group needs to be maintained. Further modifications compared to the initial inventive method are not necessary for implementing this embodiment, which indicates the flexibility of the method.

According to a preferred embodiment the authentication code is composed of a group identifier with a plurality of individual authentication codes.

With this embodiment the authentication code itself makes visible that it is assigned to a group of user equipments, and in particular to which group.

In particular a part of the authentication code is reserved for the group identifier. When the authentication code is not assigned to a group, a representation of NIL is stored, e.g. #fff.

In a particular embodiment the group identifier is associated to exactly one security center. This locates the groups to security centers and reliefs the CA from additional efforts, as the security center may provide the group part of the authentication code. Further this allows the receiving user equipment of a direct communication connection request to figure out that the request comes from a user equipment coming from another security center.

Nonetheless when the user equipment is moving, then the same steps are carried out, and all neighbouring security centers can work with the authentication code or representations thereof, no matter where it is originated from.

In another preferably embodiment it is proposed in case the first security center receives an instruction to dispose the first authentication code, the method comprises the steps of at least one of:
- invalidating the representation of the first authentication code from the first authentication list,
- sending an instruction to at least one second security center relating to invalidating the representation of said first authentication code,
- sending an indication to at least one user equipment indicating a change of the first authentication list.

In this embodiment it is handled the situation that the relationship between a user equipment and an authentication code is to be skipped, in order to assure that future requests of the user equipment with the authentication code are rejected. This is preferably the case when the user equipment leaves the area assigned to the security center. Alternatively this also is applicable when the user equipment somehow behaves abusively and shall be disallowed to communicate with other user equipments.

This purging resp. revoking of authentication codes comprises additionally the invalidating of the representation of the authentication code assigned to a user equipment in the authentication list of the security center of the area where the user equipment is currently located in.

For activating this change, the security center additionally sends an instruction to the at least one neighbouring security center, that the representation of the authentication code is invalidated. The receiving security center would then preferably take steps for invalidating the representation of the authentication code in the authentication list.

Further at least one user equipments, preferably all user equipments being located in the area assigned to the security center needs to be informed about that change as well. As this might be a security relevant update, the user equipments would preferably quickly update their authentication list.

The indication to the security center and the indication to the user equipment preferably hints to a change, in particular a security relevant change of the authentication list.

The receiving security centers likewise are configured - as for each update - to inform the user equipments located in the area assigned to the respective security center as well.

This embodiment assures that invalidated authentication codes are distributed quickly in the respective area, in order to make aware other user equipments of an invalid authentication code. So the user equipments are put into the position to block direct communication requests from such user equipments with revoked authentication codes.

With a urgency indication based on the reason of revoking the authentication code the invalidation is even accelerated.

According to the second aspect of the invention it is proposed a user equipment for establishing a secured direct communication connection with a second user equipment, both configured to operate in a wireless network, the user equipment being configured to request from a first security center accessible via the wireless network a first authentication code, said first security center being assigned to a first area the user equipment is located in, for setting up the direct communication connection after moving to a second area, the user equipment is configured to secure a communication connection request to the second user equipment by using said first authentication code. This aspect relates to a user equipment which is supposed to setup a direct communication connection request to another user equipment. The user equipment comprises receiver and transmitter circuitry for communicating over the air interface with base stations of a wireless network, the user equipment is configured to operate in, and to other user equipments by means of direct communication, like ProSe. Further it comprises processing circuitry for handling the steps as proposed in this aspect of the invention, and a memory for storing at least an authentication code, and preferably for storing authentication lists received from the service center.

Before setting up a direct communication connection request to another user equipment, it requests from a security center via the wireless network a first authentication code. This authentication code is then used for securing the direct communication connection request.

The second aspect shares the advantages of the first aspect of the invention. According to a preferred embodiment it is proposed a user equipment for handling of a secured direct communication connection request from a first user equipment according to the second aspect of the invention, both configured to operate in a wireless network, the user equipment being configured to request from a security center accessible via the wireless network an authentication list for the area the user equipment is located in, wherein the authentication list comprises at least one representation of an authentication code of a first security center of a first area, for setting up the direct communication connection with the first user equipment, which moved into said area from said first area, the user equipment is configured to:
- receive a direct communication connection request, secured by a first authentication code, from the first user equipment,
- evaluate said received authentication code with said authentication list,
- approve communication in case received request is secured according to the representation of said first authentication code stored in second authentication list.

This embodiment relates to the user equipment when it is in the role of a receiver of a direct communication request. Preferably both user equipments are configured similarly, which means both user equipments would be in the position to receive and to send direct communication connection requests to other user equipment likewise configured.

The user equipment in the role of a receiver maintains in its memory an authentication list previously received by the security center of the area where the user equipment is located in. The communication with the security center likewise is carried out via the base station the user equipment is currently camping on.

With the authentication list the user equipment is then in the position to handle a received direct communication connection request from the other user equipment. This is done by evaluating the request with the authentication list. In particular the relevant representation of the authentication code, which was used by the sending user equipment for securing the request messages, is picked from the authentication list. E.g. when a user equipment's identifier like the IMEI or MSISDN is delivered with the request, the respective authentication code representation is retrieved from the authentication list. If no authentication code is found, then the request is rejected.

If it is found, then the request message is evaluated. In case a certificate or message authentication code is used with the request message, then the codes / certificates are compared.

If the message or a hash is encrypted, then the receiving user equipment uses the representation of the authentication code, which is an decrypting key, for decryption. If the decryption is successful, and e.g. the hash matches the hash that the user equipment calculates from the received message, then the communication can be approved by sending an approval message to the requesting user equipment.

For this interaction between the two user equipments it requires at that time no ad hoc involvement of the wireless network or a security center necessary. It is only the direct communication channel between both user equipments, and both user equipments are put into the position to evaluate the eligibility of the other party without delay.

According to the third aspect of the invention it is proposed a security center for securing direct communication between a first and a second user equipment configured to operate in a wireless network,
the security center accessible for the user equipments through said wireless network, further being assigned to an area covering at least one cell of said wireless network,
the security center being configured to maintain a authentication list, wherein the security center is configured to receive a request for a first authentication code from the first user equipment,
- to check the credentials of the first user equipment provided with the request, in case the credentials are valid:
- to provide said authentication code to the first user equipment,
- to add a representation of said authentication code to the authentication list,
- to transmit and indication relating to the addition of the representation of said authentication code to the authentication list to at least one security center being assigned to another area,
- to provide a representation of the authentication list to the second user equipment upon request.

According to the third aspect it is proposed a security center which manages the authentication codes in conjunction with a requesting user equipment. The security center is preferably accessible for the user equipment through a wireless network. Preferably it is situated with a base station of a wireless network in the area, that it is supposed to cover.

Advantageously a security center is not restricted to one wireless network, it is preferably accessible by user equipments operating in other wireless networks with overlapping areas, e.g. two network operators active in the same country.

This allows that user equipments which are subscribed to different network operators can communicate via direct communication connection as well. For the alternative of wireless network specific security centers it is recommended to exchange authentication lists among security centers of other wireless networks, in proximity or being assigned to overlapping areas. The security center preferably maintains a connection to a certificate authority which is configured to supply authentication codes for user equipments that request such authentication code with valid credentials.

Further the security center maintains an authentication list which comprises at least representations of valid authentication codes for user equipments that are (or at least were) situated in the area covered by the security center.

Additionally the security center has communication means with the security centers nearby, that is those where the assigned area shares a border with the respective areas, or are overlapping.

Further the security center has communication means, in particular through the base stations, to inform the user equipments camping on base stations in the assigned area about changes of the authentication list, and consequently share these changes resp. the whole authentication list.

Hence, when the first user equipment requests at the security center for an authentication code it provides credentials with the request. The security center is configured to check the credentials and to provide the authentication code, which is preferably received from the CA. Also the checking of the credentials is preferably carried out with the help of the CA.

In any case when the credentials are not valid, then the security center will not provide a valid authentication code to the first user equipment. If so, then the authentication code is provided to the requesting user equipment. Additionally the authentication code or a representation thereof is then stored in the authentication list stored by the security center.

Furthermore the security center is configured to transmit an indication of the added authentication code to neighbouring security centers, as well as to the user equipments operating within the area assigned to the security center.

As one option the indication provides only an instruction to encourage the receivers to request for an update. Alternatively with the indication the representation of the new authentication code is provided, which then is handled accordingly.

At one point in time, preferably regularly, the whole authentication list is exchanged between the security center and other security centers resp. user equipments.

As the requesting user equipment itself is also informed by the indication about the update to the user equipments in the respective area, it is likewise informed that the authentication code is now ready to be used for setting up a direct communication connection request to another user equipment.

According to a preferred embodiment it is proposed that the security center is further configured to receive an indication relation to the addition of a representation of an authentication code to the authentication list of the second security center being assigned to the second area, to amend the authentication list maintained by the security center based on the received information.

In this embodiment the security center is acting in the role of a neighbouring security center. That means a first user equipment might plan to operate with a second user equipments in the area of this security center, whereby the first user equipment did not receive its authentication code from this security center.

Consequently the second user equipment would have no indication about the eligibility of the requesting user equipment. For solving this issue, the respective security center is configured to receive an indication from the security center where the respective first user equipment was requesting its authentication code before resp. in which assigned area it was operating before.

This indication informs the security center that a new authentication code, or a representation thereof was added to the authentication code of the neighbor security center. This might have two reasons: the first user equipment requested a new authentication code, or the first user equipment got assigned a new authentication code from the neighbouring security center. The latter is the case when the first user equipment was moving into the area of that security center.

The respective security center based on this indication is informed about this situation. This happens either by requesting more information from the neighboring security center, or already the security center receives with the indication the representation of the new authentication code and adds it to the authentication list held by the security center.

As set out before, the amendment of the authentication list triggers at the security center an information to the user equipments located in the area assigned to the security center. This brings the user equipments in the position to accept direct communication connection requests from the first user equipment which received the new authentication code.

This is advantageous as the informed user equipments are provided with an update on the authentication list already before the respective user equipment might enter the area and immediately request a direct communication connection. With this desynchronization between authentication and connection setup the achieved goal of speeding up the connection without losing security is fulfilled.

In a further advantageous embodiment it is proposed that the security center is further configured to provide to the first user equipment a second valid authentication code, to add a representation of said authentication code to said second authentication list, and to remove the representation of the first authentication code assigned to the first user equipment from the second authentication list.

With this embodiment the security center handles user equipments coming from other security centers. Instead of spreading the authentication code further and further, the respective security center replaces the authentication code with an own authentication code - preferably requested from the CA as well - once the user equipment arrives at the area assigned to the security center. Consequently the new authentication code also replaces the previously used authentication code in the authentication list. This is preferably happing with a time lag, with an overlapping time where both authentication codes are valid.

Preferably the security center gets knowledge about this situation through a location/tracking area update of the user equipment or a direct communication connection request to another user equipment.

Once the new authentication code is replaced, the information about this update of the authentication list is spread to the neighbouring security centers, and the user equipments located in the area of the security center. According to another preferred embodiment it is proposed that the security center belongs to a first wireless network and the second security center belongs to a different wireless network, the security center being further configured, after providing the second valid authentication code to the first user equipment, to request from the wireless network the second security center is belonging to an authentication confirmation concerning the first user equipment for the wireless network.

In this embodiment the situation of two neighbouring security centers being assigned to different wireless network is handled.

Technically speaking the embodiment additionally comprises a check with the HLR of the user equipment which got its authentication code from the other security center. In order to speed up the process this is happening after the user equipment and its authentication was accepted by the security center, resp. a replacement authentication code was delivered.

This derives from the normal process. This is advantageous as it speeds up the process. The approach is based on the chain of trust between the security centers, so that the authentication code can without additional checks be provided. Further this also solves the situation for roaming situations. When a user equipment is crossing country resp. wireless network borders, then by exchanging the authentication codes a seamless connectivity is maintained. Once the HLR check should bring a negative result, then the authentication code of the user equipment gets revoked, by informing all user equipments in the area of the security center.

In a fourth aspect of the invention it is proposed a system for securing a direct communication connection between two user equipments, both configured to operate in a wireless network, the system further comprising at least a first and at least one second security center accessible via the wireless network, said first security center being assigned to a first area the first user equipment is located in, said first security center maintaining a first authentication list for said first area, the first user equipment maintaining a first authentication code received from the first security center, wherein a representation of said first authentication code is added to said first authentication list, further said representation of said first authentication code is exchanged with said at least one second security center covering a second area in proximity of the first area, the representation of said first authentication code being added to a second authentication list for said second area, maintained by said second security center, and in case said first user equipment has moved to the second area, for setting up the direct communication connection with a second user equipment, said second user equipment having retrieved the second authentication list from the second security center, the system is configured:
- to secure that communication connection request by using said first authentication code,
- to evaluate at said second user equipment said received request with the second authentication list,
- to approve communication, in case received request is secured according to the representation of said first authentication code stored in second authentication list.

This aspect of the invention relates to the system where said security centers and user equipments from the previous aspects of the invention are interacting. This aspect shares the advantages of the previous aspects.

As it is shown this invention advantageously solves the depicted problem and proposes an approach for allowing direct communication connections between moving user equipments, without a delay in the setting up, but by upholding security and privacy requirements.

### BRIEF DESCRIPTION OF THE DRAWINGS

The following description and the annexed drawings set forth in detail certain illustrative aspects and are indicative of but a few of the various ways in which the principles of the embodiments may be employed. Characteristics and advantages of the present invention will appear when reading the following description and annexed drawings of advantageous embodiments given as illustrative but not restrictive examples.
- Fig. 1: represents an exemplifying scenario where the inventive concept is applied to as an embodiment;
- Fig. 2: shows a first sequence chart according to a preferred embodiment of the invention;
- Fig. 3: shows a second sequence chart according to another preferred embodiment of the invention, in particular executed after the embodiment of the first sequence chart.

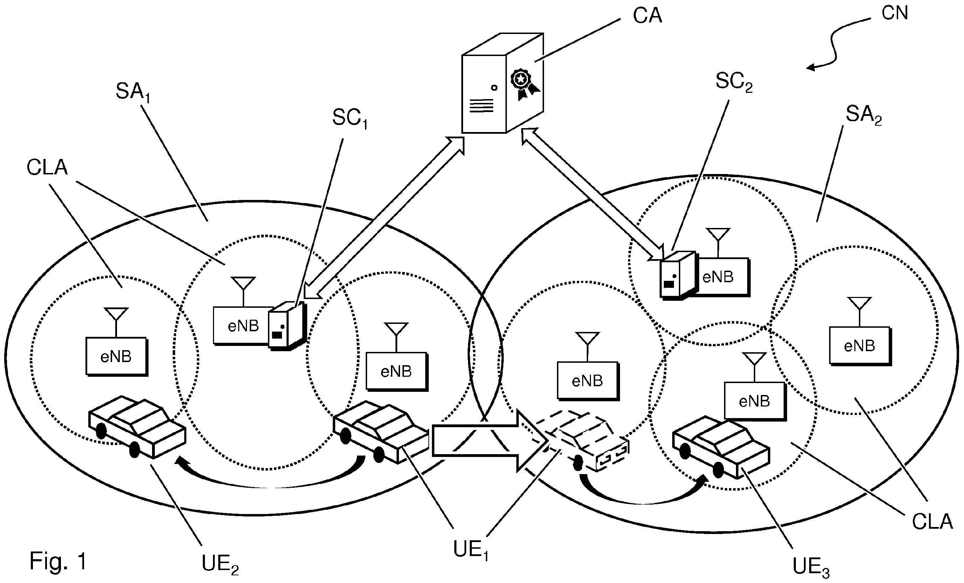

FIG. 1 schematically shows the situation of two exemplifying security areas SA₁, SA₂ for direct communication between user equipments UE₁, UE₂ located in said security area. The user equipments are furthermore configured to operate in a cellular wireless network CN, by means on camping on base stations eNB of the wireless network, when it is situated in the cell area CLA of the respective base station.

At least one of the user equipments involved in the direct communication is placed on a moving vessel, in particular a vehicle. In the shown exemplifying embodiment the user equipments UE₁, UE₂, UE₃ are all placed on vehicles. The direct communication connection is a wireless communication where the communication link is directly established between the two user equipments. That means, the direct communication connection differs e.g. from a regular phone call between two wireless handsets, which can be situated anywhere, where the communication link is in reality happening between the user equipment and the serving of the base station where the user equipment is currently operating in, then through a routing inside the one or more involved wireless networks and finally between the user equipment which is the communication endpoint and its serving base station.

For the direct communication connection the user equipments are generally using their credentials of the wireless network, in particular provided by means of a subscriber identification card, in order to authenticate towards the other user equipment. However as such authentication is prone to tracking the owner of the user equipments when moving, and additionally requires lengthy interaction with the serving base station this embodiment of the inventive method is designed to solve that issue.

For doing so, the coverage area of a wireless network CN is equipped with service centers SC₁, SC₂. Such service centers are supposed to be assigned to a security area SA₁, SA₂. Preferably the service centers are installed with a base station eNB of the wireless network that is situated within the security area, or in other connection to wireless network components. By such architecture the service centers SC₁, SC₂ are accessible for the user equipments via their serving base stations.

Furthermore the service centers SC₁, SC₂ are configured to communicate with a certificate authority CA, which is supposed to provide on request valid authentication codes like certificates, which can be used to sign communication messages. For the sake of simplicity in this embodiment it is used a certificate throughout the rest of the exemplifying embodiment.

Typically the access to the certificate authority is provided by means of wireless network lines.

Before one user equipment UE₁ wants to establish a connection to another user equipment UE₂ it has to request a certificate from the security center SA₁ responsible for the security area, where the current serving base station of user equipment UE₁ is located. The security area SA₁, SA₂ preferably comprises a plurality of cell areas CLA of base station eNB.

Preferably the received certificate is unique to the security area. However the certificate is bound to be valid for said security area SA₁.

In that sense when a user equipment UE₁ is trying to setup a connection to user equipment UE₂, then the certificate is provided with the connection request. The user equipment UE₂ has the possibility to figure out if the certificate is valid for this security area by checking if the certificate is part of the list of valid certificates for the security area provided by the service center SA₂.

This check is preferably done by checking against a downloaded list of valid certificates (resp. an identification of the certificates). Alternatively the user equipment sends a validity check request to the security center SC₁ with a representation of the received certificate, and gets in response an indication if the certificate is valid.

This exercise is preferably carried out between two vehicles equipped with direct communication link capable communication equipment. Such communication request preferably relates to brake warning, or other communication for making possible an autonomously driving car. Alternatively the second user equipment is a fixed equipment, like a beacon, traffic light, speed signs or other street furniture.

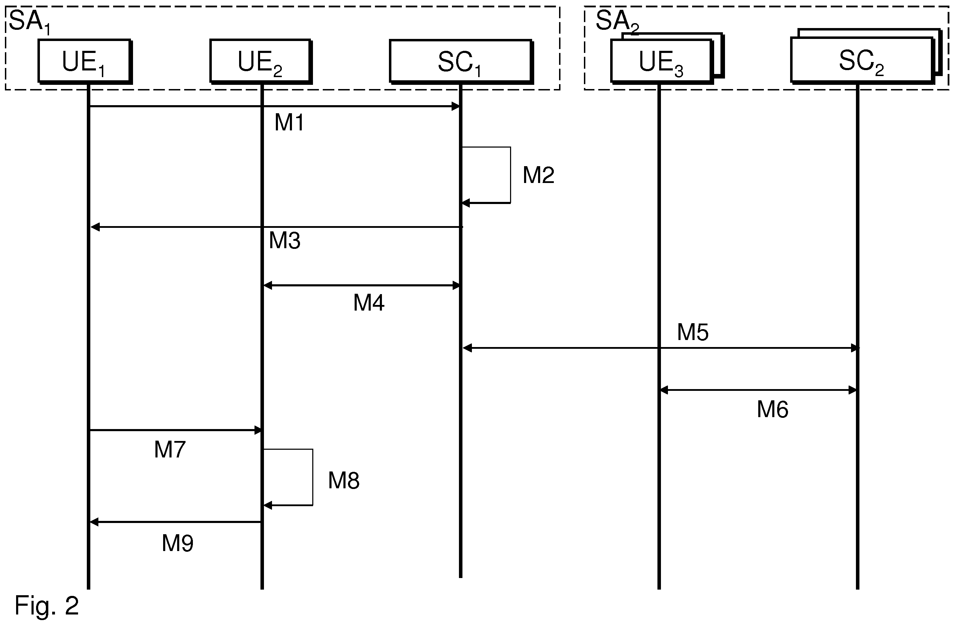

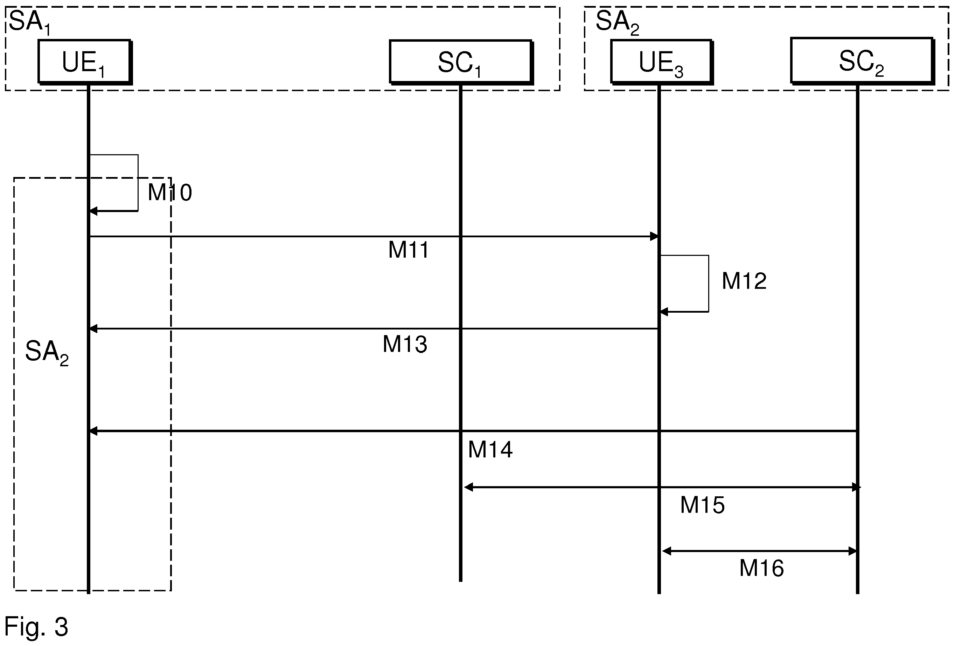

The invention in particular becomes particularly important when the user equipment UE₁ is moving to the second security area SA₂ and tries to setup a direct communication connection with a user equipment UE₃ camping on a base station eNB located in said security area SA₂. This scenario requires a special solution as the user equipment UE₃ has no indication from security center SC₁ about the certificate used by the requesting user equipment UE₁. In Figs 2 and 3 it is illustrated the procedure to make such a direct communication possible in an exemplifying embodiment.

In FIG. 2 it is assumed that the user equipment UE₁ which is expected to make direct communication connection requests to other user equipments UE₂, UE₃ is camping on a base station of a wireless network, wherein the base station eNB (not shown) is situated in the security area SA₁ of security center SC₁. Before being in the position to request or execute a direct communication connection to another user equipment, the user equipment UE₁ needs to request for an authentication code from the security center SC₁. Such an authentication code is in particular a certificate, a digital signature, message authentication code (MAC) or any other type of cryptographic security token. The request M1 is sent to the security center SC₁, by means of the serving base station. The address from the security center assigned to the base station is either known by the base station or is preconfigured. Additionally for certain base stations the security center may even be part of, i.e. located at the same location.

Part of the request are credentials identifying the user equipment towards the security center SA₁, in particular being provided by the subscriber identification card to the user equipment. Examples for such credentials are the IMEI, IMSI, MSISDN or other identificators stored on the subscriber identification card. With such credentials the security center SC₁ requests from a certificate authority CA an authentication, which is done by message M2. At least one of the security center, the base station or the certificate authority CA has means to figure out if the credentials are valid, in particular by interacting with the core network of the wireless network, where in the HSS such credentials are stored. When no valid credentials are submitted, the security center will reject the direct communication for the user equipment, i.e. the CA will not task the security center SC₁ to provide an authentication code to the user. Moreover other blocking measures are preferably taken.

When the credentials are found to be valid, then the security center SC₁ will provide with message M3 an authentication code to the requesting user equipment UE₁. Furthermore the security center SC₁ maintains an authentication list. When the new authentication code is provided to the requesting user equipment, the new authentication code or a representation thereof is added to the authentication list as well. Like above it is assumed that the authentication code represents a certificate.

In an alternative solution a list of valid codes exist already for SC₁. Based on the request to the CA the security center choses out of said list one authentication code to be used by UE₁. Preferably the authentication code is not used for another user equipment at that time.

When an authentication code is ascertained for the user equipment UE₁, the security center SC₁ informs the other user equipment UE₂ operating in the security area of said security center about such change in the authentication list with message M4. This is preferably happening by a broadcast, but is also foreseen to happen on request. When such a change is indicated then the other user equipment UE₂ preferably requests for updating its authentication list. This is preferably done by sending an update indication, wherein added, deleted or changed authentication codes are indicated.

The later step does not need to be taken if the authentication list is ascertained as a pre-configured list, out of which authentication codes are just assigned to user equipments. The assignment preferably happens for unused codes but in a more advanced scenario also the least used code could be always re-used for further users. I.e. the communication code would not be uniquely used by a single user but shared by a group. That means in cases of high load such authentication codes can even be reused in parallel. This leads to a higher capacity for such security areas.

For the case of asymmetric keys used for the authentication code, the public key is provided to the other user equipments. The private key is then used by the sending user equipment for encrypting the message or at least parts of it. Now the user equipment UE₁ is put into the position to establish direct communication connections with another user equipment in this security area. When it sends a direct communication request M7 to another user equipment, this message is using the authentication code received from the security center SC₁ for securing the message. In this embodiment the message comprises the authentication code, resp. a certificate.

The receiving user equipment UE₂ checks the authentication code received with the direct communication request against the authentication list in this security area in step M8.

If the authentication code is valid, then the user equipment UE₂ will answer to such a request with a confirmation message M9. If the authentication code is not valid, the communication request will be rejected.

This basic method is advantageous as it fulfills the mandatory requirements: It is safe, it is fast and it does not allow tracking of the moving user equipment UE₁. In particular by handling the main and time consuming security features before setting up the connection leads to a much faster connection establishment as it would be the case when the receiving user equipment would check the eligibility of a requesting user equipment with central servers. For the use case of e.g. vehicle-to-vehicle (V2V) communication such known times for setting up a secure connection are not feasible.

The described basic procedure only handles the case of a user equipment which tries to setup a direct communication connection to a user equipment UE₂ which is located in the same security area SA₁, where the requesting user equipment UE₁ received its authentication code.

For the relevant case that the user equipment UE₁ might move to another security area, in this exemplifying embodiment two more steps were shown.

First the security center SC₁ does not only inform the user equipments located in the security area SA₁ about the change in the authentication list. Moreover it informs at least one other security center SC₂, being assigned to another security area SA₂ about the change in the authentication list.

Preferably the service center SC₁ sends such a message M5 with the changes in the authentication list to all security centers of security areas in the neighborhood of the security area SA₁. Also here alternatively in case a pre-configured list of codes would be used that list could be provided at any time. The goal is, that at best the user equipment cannot leave the security area SA₁ without entering another security area, where the assigned security center SCₓ is already informed about the change of the authentication list.

With the exchange of the authentication list, the authentication codes provided by a security center of the neighborhood is also accepted - at least once - for authenticating its direct communication connection requests in the neighboring security areas.

Consequently also the user equipments UE₃ being located in the neighbor security area SA₂ are informed by message M6. This message M6 complements to the message M4, as it indicates nothing more than an indication about a change of the authentication list in security center SC₂.

In FIG. 3 it is shown how the user equipment UE₁ would establish a direct communication connection after moving in the security area SA₂ (with step M10).

When the user equipment UE₂ wants to establish a direct communication connection it sends request M11 to user equipment UE₃. This request - like request M7 in Fig. 2 - comprises the authentication code, which the user equipment received from service center SC₁, or a representation thereof. The addressed user equipment UE₃ checks the validity of the request by checking against the authentication list for security area SA₂, shown as message M12.

As shown before, such authentication list likewise comprises authentication codes provided from neighboring security centers, including those from security center SC₁, and consequently the authentication code assigned to user equipment UE₁ by security center SC₁ should be available in the authentication list provided to user equipment UE₃ with step M6, in Fig. 2.

If this is the case, the user equipment UE₂ will confirm the establishment of the direct communication connection with a response message M13 to user equipment UE₁.

Preferably user equipment UE₂ informs the security center SC₂ after setting up the direct communication connection about the fact, that an authentication code from another security center is used.

The area can be designed as a security area or in coverage identical to a location or tracking area upon when entering the user equipment sends a message to the wireless network to be reachable for calls in said area. This could also be used that the wireless network itself gains the knowledge in the security center, that a new participant from another location/security area has entered. Preferably the authentication code is composed that way, that it allows the receiving user equipment to derive the security center resp. area which distributed this authentication code.

After receiving such indication the security center SC₂ sends an indication M14 to the by-then guest user equipment UE₁, for exchanging the foreign authentication code by an autochthonous authentication code. Preferably this leads the user equipment to send another request comparable to message M1 to the security center SC₂, including its credentials (not shown). In response the security center provides an authentication code for this security area. Furthermore the neighbor security centers are informed. For the security center SC₁, which released the old authentication code, this information with message M15 received from security center SC₂ means, that the original authentication code is invalidated, but can be reused at a later time. Moreover with the messages M16 the user equipments UE₃ in the security area SA₂ are informed of the change, which includes a invalidation of the original authentication code and the newly assigned authentication code. If a pre-configured list are used, this step could be obsolete, i.e. each security center would have a fixed set of codes it can assign and all neighbour centers have the code list of their direct neighbors which are also considered valid for first communication.

By overwriting the authentication code from the neighbor security center SC₁ the security center SC₂ allows the user equipment UE₁ to move on to another security area which is not a neighbor of security area SA₁. Hence, the security center assigned to this new security area would have no information about the originally used authentication code. Informing more and more security centers in the coverage area of a wireless network with the same authentication code would in the end thwart the tracking avoidance efforts.

Furthermore this approach helps mitigating possible vulnerabilities in the neighborhood authentication described before, as each user equipment can only once setup a direct communication connection with its original authentication code.

In the above detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the scope of the invention. In addition, it is to be understood that the location or arrangement of individual elements within each disclosed embodiment may be modified without departing from the invention. The above detailed description is, therefore, not to be taken in a limiting sense, and the scope of the present invention is defined only by the appended claims, appropriately interpreted, along with the full range of equivalents to which the claims are entitled.

## Claims

1. Method for securing a direct communication connection between two user equipments (UE₁, UE₃), both configured to operate in a wireless network (CN), the first user equipment maintaining a first authentication code received from a first security center (SC₁) accessible via the wireless network, said first security center being assigned to a first area (SA₁) the first user equipment is located in, said first security center (SC₁) maintaining a first authentication list for said first area,
wherein a representation of the first authentication code is added to said first authentication list,
further said representation of said first authentication code is exchanged with at least one second security center (SC₂) covering a second area (SA₂) in proximity of the first area, being added to a second authentication list for said second area, maintained by said second security center, and
in case said first user equipment (UE₁) has moved to the second area, the step of setting up the direct communication connection with a second user equipment (UE₃), said second user equipment having retrieved the second authentication list from the second security center, comprises:
- securing that communication connection request by using said first authentication code,
- evaluating at second user equipment said received request with the second authentication list,
- approving communication, in case received request is secured according to the representation of said first authentication code stored in the second authentication list.

2. Method according to claim 1,
wherein the second security center (SC₂) provides to the first user equipment (UE₁) a second authentication code,
and adding a representation of said second authentication code to said second authentication list,
and removing the representation of the first valid authentication code assigned to the first user equipment from the second authentication list.

3. Method according to at least one of the previous claims,
wherein the user equipment (UE₁) is connected to a subscriber identity equipment,
wherein receiving of the first authentication code from the first security center comprises sending a request to the wireless network (CN) hosting the first security center (SC₁) including credentials relating to data stored on said subscriber identity equipment.

4. Method according to at least one of the previous claims,
wherein the first area (SA₁) comprises more than one cell of the wireless network (CN) and the base stations (eNB) of said more than one cells are connected to said first security center (SC₁).

5. Method according to one of the previous claims wherein at least one security center (SC₁) maintains an authentication list, shared with the neighboring security center (SC₂),
wherein the step of providing of an authentication code to a requesting user equipment (UE₁) comprises selection of one representation of an authentication code stored in the authentication list.

6. Method according to at least one of the previous claims,
wherein at least two user equipments (UE₁, UE₂) belong to a group maintained by the wireless network (CN),
wherein the at least two user equipments receive in response to the request to the first security center (SC₁) the same first authentication code.

7. Method according to claim 6,
wherein the authentication code is composed of a group identifier with a plurality of individual authentication codes.

8. Method according to at least one of the previous claims,
wherein in case the first security center (SC₁) receives an instruction to dispose the first authentication code, the method comprises the steps of at least one of:
- invalidating the representation of the first authentication code from the first authentication list,
- sending an instruction to at least one second security center relating to invalidating the representation of said first authentication code,
- sending an indication to at least one user equipment indicating a change of the first authentication list.

9. User equipment (UE₁) for establishing a secured direct communication connection with a second user equipment (UE₃), both configured to operate in a wireless network (CN),
the user equipment being configured to request from a first security center (SC₁) accessible via the wireless network a first authentication code,
said first security center being assigned to a first area (SA₁) the user equipment is located in,
for setting up the direct communication connection after moving to a second area (SA₂), the user equipment is configured to secure a communication connection request to the second user equipment (UE₃) by using said first authentication code.

10. User equipment (UE₃) for handling of a secured direct communication connection request from a first user equipment (UE₁) according to claim 9, both user equipments being configured to operate in a wireless network (CN),
the user equipment (UE₃) being configured to request from a security center (SC₂) accessible via the wireless network (CN) an authentication list for the area (SA₂) the user equipment is located in,
wherein the authentication list comprises at least one representation of an authentication code of a first security center (SC₁) of a first area (SA₁),
for setting up the direct communication connection with the first user equipment (UE₁), which moved into said area from said first area, the user equipment (UE₃) is configured to:
- receive a direct communication connection request, secured by a first authentication code, from the first user equipment (UE₁),
- evaluate said received authentication code with said authentication list,
- approve communication in case received request is secured according to the representation of said first authentication code stored in second authentication list.

11. Security center (SC₁) for securing direct communication between a first and a second user equipment (UE₁, UE₂) configured to operate in a wireless network (CN),
the security center accessible for the user equipments through said wireless network, further being assigned to an area (SA₁, SA₂) covering at least one cell of said wireless network,
the security center being configured to maintain a authentication list, wherein the security center is configured to receive a request for a first authentication code from the first user equipment,
- to check the credentials of the first user equipment provided with the request, in case the credentials are valid:
- to provide said authentication code to the first user equipment,
- to add a representation of said authentication code to the authentication list,
- to transmit an indication relating to the addition of the representation of said authentication code to the authentication list to at least one second security center (SC₂) being assigned to a second area (SA₂),
- to provide a representation of the authentication code to the second user equipment upon request.

12. Security center (SC₁) according to claim 11,
further being configured to receive an indication relation to the addition of a representation of an authentication code to the authentication list of the second security center (SC₂) being assigned to the second area (SA₂),
to amend the authentication list maintained by the security center based on the received information.

13. Security center (SC₁) according to at least one of the claim 11 to 12, configured to provide to the first user equipment (UE₁) a second valid authentication code,
to add a representation of said authentication code to said second authentication list, and to remove the representation of the first authentication code assigned to the first user equipment from the second authentication list.

14. Security center (SC₁) according to at least one of the claims 11 to 13, wherein the security center belongs to a first wireless network (CN) and the second security center (SC₂) belongs to a different wireless network,
the security center (SC1) being further configured, after providing the second valid authentication code to the first user equipment (UE₁), to request from the wireless network the second security center is belonging to an authentication confirmation concerning the first user equipment for the wireless network.

15. System for securing a direct communication connection between two user equipments (UE₁, UE₂), both configured to operate in a wireless network (CN), the system further comprising at least a first and at least one second security center (SC₁, SC₂) accessible via the wireless network, said first security center being assigned to a first area (SA₁) the first user equipment is located in, said first security center maintaining a first authentication list for said first area, the first user equipment maintaining a first authentication code received from the first security center,
wherein a representation of said first authentication code is added to said first authentication list,
further said representation of said first authentication code is exchanged with said at least one second security center covering a second area (SA₂) in proximity of the first area, the representation of said first authentication code being added to a second authentication list for said second area, maintained by said second security center, and
in case said first user equipment has moved to the second area, for setting up the direct communication connection with a second user equipment, said second user equipment having retrieved the second authentication list from the second security center, the system is configured:
- to secure that communication connection request by using said first authentication code,
- to evaluate at said second user equipment said received request with the second authentication list,
- to approve communication, in case received request is secured according to the representation of said first authentication code stored in second authentication list.
